# EUROPEAN PATENT APPLICATION

(11) **EP 1 975 880 A1**
(43) Date of publication of application: **01.10.2008**
(21) Application number: 08000850.1
(22) Date of filing: 17.01.2008
(51) Int. Cl.: G06T 11/00

(54) **X-ray ct image reconstruction method**

(30) Priority: 27.03.2007 JP 2007080450
(71) Applicant: Hitachi, Ltd., Chiyoda-ku Tokyo 100-8280 (JP)
(72) Inventor: Sasaki, Ichiro, Tokyo 100-8220 (JP); Sadaoka, Noriyuki, Tokyo 100-8220 (JP)
(74) Representative: Beetz & Partner

(57) **Abstract**

In an X-ray CT image reconstruction method, position and size of a high X-ray absorber (302) are determined by photographing a to-be-measured-target (300) using high-energy X-rays, and performing the image reconstruction. Moreover, photographed data is computed which corresponds to a case where the high X-ray absorber (302) is photographed using low-energy X-rays. Next, the to-be-measured-target (300) is photographed using the low-energy X-rays. Furthermore, positions and sizes of low X-ray absorbers (301, 303) are determined by subtracting influence of the high X-ray absorber (302) computed above from projection data (601) which results from the photography using the low-energy X-rays. Finally, the positions and sizes of the high and low X-ray absorbers (302, 301, 303) are synthesized on the reconstructed image.

## Description

### BACKGROUND OF THE INVENTION

The present invention relates to an image reconstruction method for an X-ray CT apparatus.

An X-ray CT apparatus is an apparatus for acquiring the cross-sectional structure of a measurement target in accordance with the following processing steps:

A measurement target is irradiated with X-rays from a certain one direction, thereby acquiring projection data which reflects X-ray absorption rate of the measurement target overlapping with path of the X-rays. Next, this operation is performed from a large number of directions which surround and cover the measurement target. Finally, the reconstructed image (i.e., cross-sectional view) of the measurement target is determined by performing a computation from a set of these large number of projection data. Actually, the projection data in the respective directions are subjected to a one-dimensional Fourier transform. Moreover, these one-dimensional Fourier transformed projection data are synthesized, thereby creating a two-dimensional Fourier transformed image. Finally, this two-dimensional Fourier transformed image is subjected to a two-dimensional inverse Fourier transform, thereby acquiring the reconstructed image.

When the measurement target is formed of a plurality of constituent materials whose X-ray absorption rates differ from each other, the X-ray absorption rates change discontinuously with each boundary sandwiched therebetween. Accordingly, discontinuous (i.e., steep) changes appear on the projection data of the measurement target as well. As a result, high-frequency components caused by the discontinuous changes appear tremendously on the one-dimensional Fourier transformed images of the projection data. When acquiring the reconstructed image by applying the two-dimensional inverse Fourier transform to the two-dimensional Fourier transformed image created by synthesizing the one-dimensional Fourier transformed images, an imaginary image (i.e., noise pattern) which is referred to as "artifact" appears on the reconstructed image. This appearance is attributed to a numerical computation error caused by the high-frequency components. This "artifact" becomes a serious obstacle in evaluating and utilizing the reconstructed image.

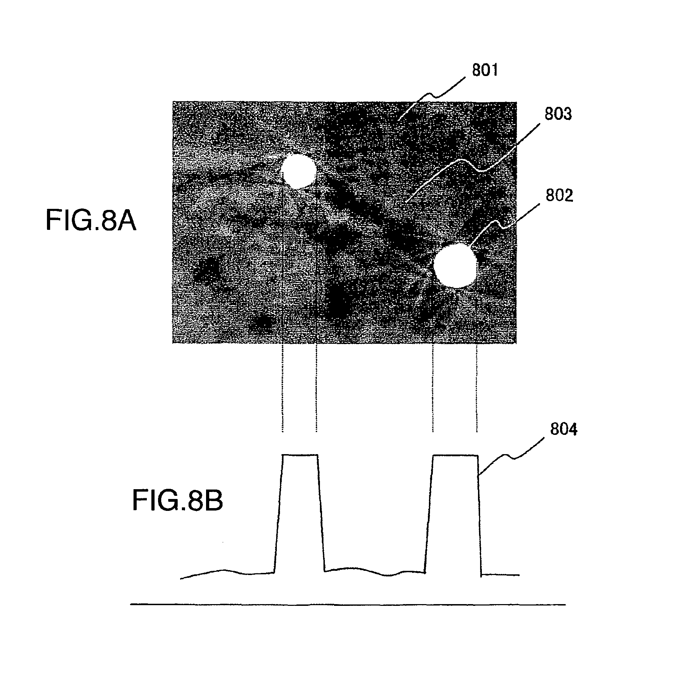

For example, Fig. 8A illustrates the reconstructed image of a measurement target which is formed by combining a resin-made wheel 801 with a stainless-made shaft 802. The resin-made wheel 801 and the stainless-made shaft 802 are illustrated. An artifact 803, however, appears in a radial manner from the shaft 802. On the projection data in a certain one direction for this artifact, the shaft portion appears as a steep change 804 as is illustrated in Fig. 8B.

Up to the present, several proposals have been made concerning a reconstruction method which is capable of reducing an artifact. For example, in JP-A-2006-167161, the following method is disclosed: Using a certain threshold value set in advance, a portion indicating a high X-ray absorber (i.e., metallic part) is extracted from acquired projection data. Then, the projection data is corrected using this result, thereby performing the artifact reduction processing.

### SUMMARY OF THE INVENTION

In JP-A-2006-167161 described above, it is required to set a threshold value in advance in order to extract the high X-ray absorber (metal). This setting is implementable in a case where it is possible to make a forecast about the high X-ray absorber and the other constituent materials, such as a case of, e.g., medical use. This setting, however, is difficult to implement in a case of industrious use where a to-be-measured target composed of various types of constituent materials must be employed as the measurement target. Also, it is conceivable that applying this method is also difficult with respect to a case where there exist three or more types of constituent materials.

Accordingly, an object of the present invention is to provide an X-ray CT image reconstruction method which is capable of reducing an artifact even with respect to a to-be-measured target whose parts' materials are not identified.

In order to accomplish the above-described object, it is required to make it possible to clearly identify and extract parts of respective materials with respect to a to-be-measured target constituted with a composite material.

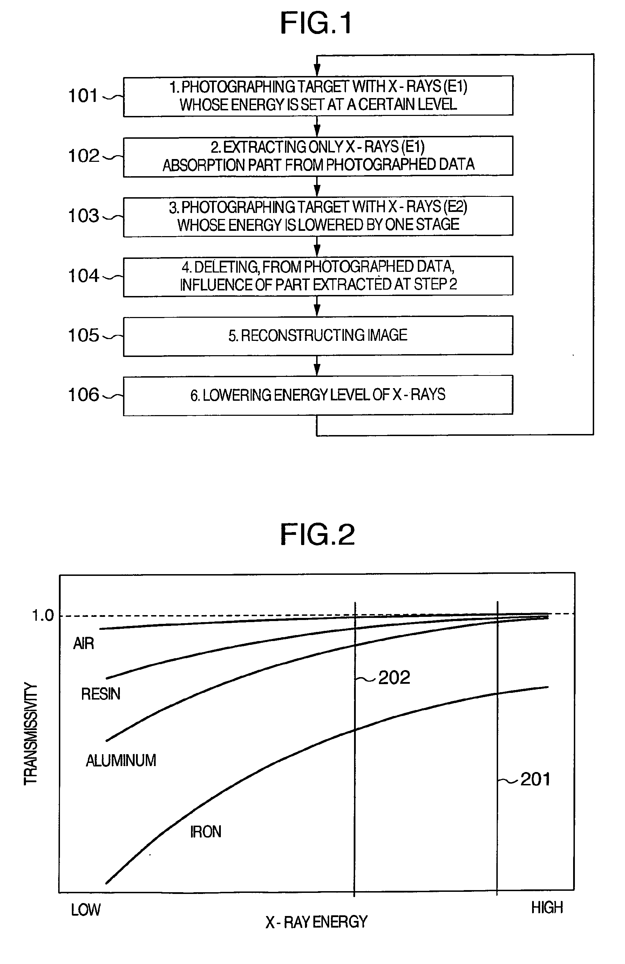

As a method for satisfying this requirement, it is conceivable to photograph the to-be-measured target a plurality of times under a condition that energy of X-rays is changed. Fig. 2 schematically illustrates transmission characteristics of X-rays in various types of materials. The transverse axis denotes energy of X-rays with which the target is irradiated. The longitudinal axis denotes transmissivity, i.e., concrete transmission characteristics of air, resin, aluminum, and iron. By irradiating the target with high-energy X-rays (201), parts of the materials having high X-ray absorption rates, such as iron and copper, appear on the projection data of the target. Parts of the materials such as aluminum and resin, however, result in almost no attenuation of X-rays, thus becoming almost the same level as that of air on the projection data. From positions and sizes of the high X-ray absorption parts (such as iron and copper) extracted in this way, conversely, it becomes possible to create projection data in a case where only these parts exist.

Next, the energy of X-rays is lowered down to an intensity at which aluminum appears on the projection data (202). Then, data obtained by applying an energy conversion to the projection data based on the high X-ray absorption part determined above is subtracted from this projection data on which aluminum appears. In the subtracted projection data, there exists none of the boundary between the high X-ray absorption part and the other parts. Accordingly, this projection data is not discontinuous data. As a result, the high-frequency components are small which appear when this projection data undergoes the Fourier transform. This feature suppresses the artifact which is caused by the high-frequency components when this projection data is reconstructed. Namely, it becomes possible to obtain the reconstructed image with no artifact appearing, i.e., the reconstructed image at the time when none of the high X-ray absorption part is assumed to exist. By lowering the energy of X-rays sequentially in accordance with these processing steps, it becomes possible to determine positions and sizes of the parts sequentially starting from the part of the material having the high X-ray absorption rate. Then, superimposing these positions and sizes of the parts on each other on the reconstructed image allows acquisition of a final image to be acquired as the purpose. Fig. 1 illustrates the flowchart of this method according to the present invention.

According to the method of the present invention, it becomes possible to suppress a discontinuity (i.e., steep change) on the projection data caused by a boundary between parts whose X-ray absorption rates differ from each other. Consequently, an artifact caused by this discontinuity is reduced tremendously.

Other objects, features and advantages of the invention will become apparent from the following description of the embodiments of the invention taken in conjunction with the accompanying drawings.

### BRIEF DESCRIPTION OF THE DRAWINGS

Fig. 1 is the diagram for illustrating the algorithm of the present invention;
Fig. 2 is the diagram for illustrating the transmission characteristics of X-rays in various types of materials;
Fig. 3 is a diagram for explaining a first embodiment of the present invention;
Fig. 4A and Fig. 4B are diagrams for explaining a case of high energy in the first embodiment of the present invention;
Fig. 5A to Fig. 5D are diagrams for explaining a case of intermediate energy in the first embodiment of the present invention;
Fig. 6A to Fig. 6E are diagrams for explaining a case of low energy in the first embodiment of the present invention;
Fig. 7 is a diagram for explaining a second embodiment of the present invention; and
Fig. 8A and Fig. 8B are the diagrams for explaining the artifact.

### DESCRIPTION OF THE INVENTION

Hereinafter, referring to the drawings, the explanation will be given below concerning embodiments of the present invention.

### [Embodiment 1]

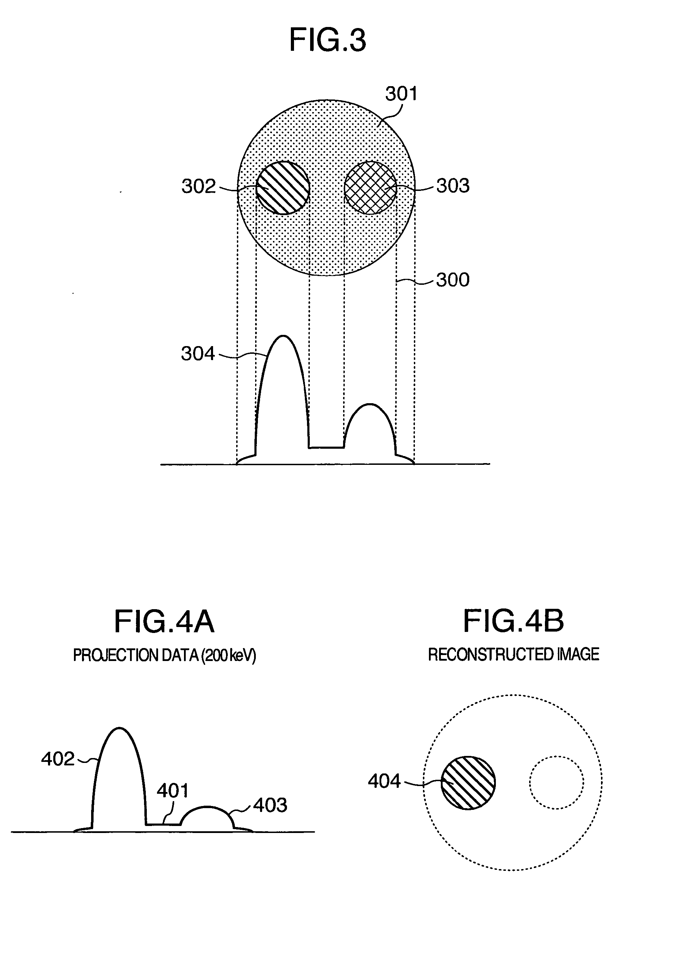

Referring to Fig. 3 through Fig. 5A to Fig. 5D, the explanation will be given below regarding a first embodiment of the present invention. Fig. 3 illustrates the cross-section of a to-be-measured target 300 and X-ray projection data 304 obtained in a certain one direction. In the to-be-measured target 300, an iron-made cylindrical column 302 and an aluminum-made cylindrical column 303 are embedded in a resin 301. On the projection data 304, steep changes are seen at portions which are equivalent to a boundary between the iron and the resin and a boundary between the aluminum and the resin. In the reconstruction methods up to the present, the presence of these steep changes causes artifacts to occur.

Here, Fig. 4A illustrates projection data which is acquired when the to-be-measured target 300 is irradiated with high-energy X-rays (e.g., 200 keV, this value depends on size of the to-be-measured target) (this step corresponds to 101 in Fig. 1). The portions 401, 402, and 403 are attributed to the resin 301, the iron-made cylindrical column 302, and the aluminum-made cylindrical column 303, respectively. Since the energy of X-rays is high, the absorption level as a whole is lowered. At this energy level in particular, it is allowable to regard the aluminum and the resin as being substantially transparent. Accordingly, this projection data 304 obtained at a certain X-ray irradiation angle is acquired. Then, this projection data is subjected to a Fourier transform. Moreover, the other projection data are obtained while changing the X-ray irradiation angle little by little (e.g., 0. 5 degree), then being subjected to a Fourier transform similarly. Furthermore, the resultant entire Fourier transformed projection data are synthesized, thereby creating a two-dimensional Fourier transformed image. Finally, this two-dimensional Fourier transformed image is subjected to an inverse Fourier transform (these series of operations are referred to as "reconstruction"). This reconstruction makes it possible to determine position and size of the iron-made cylindrical column 302 as a reconstructed image illustrated in 404 in Fig. 4B (this step corresponds to 102 in Fig. 1).

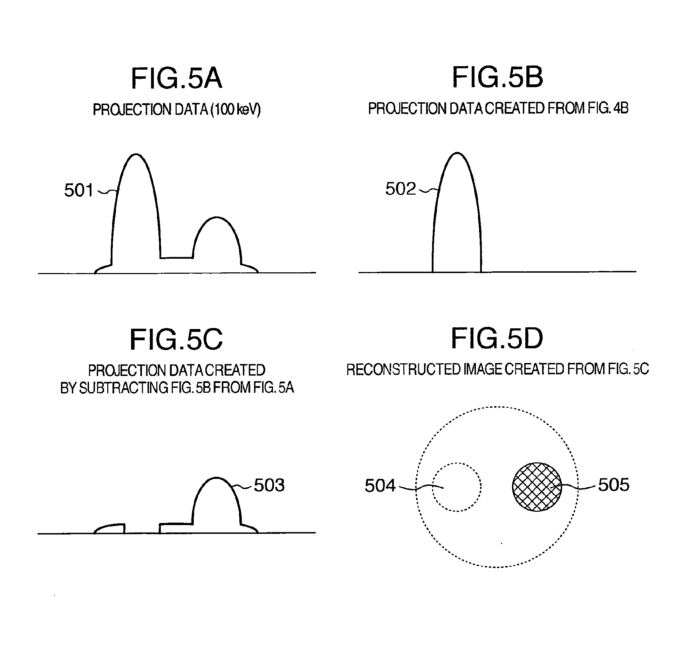

Next, the to-be-measured target 300 is photographed in such a manner that the energy of X-rays is lowered down to a certain level (e.g., 100 keV) (this step corresponds to 103 in Fig. 1). Projection data obtained in this case is illustrated in 501 in Fig. 5A. Moreover, projection data illustrated in 502 in Fig. 5B, which is to be obtained by photographing only the iron-made cylindrical column 302 with the use of the 100-keV X-rays, is created by applying an energy conversion to the position and size of the iron-made cylindrical column 302 determined at the previous step and illustrated in 404 in Fig. 4B. Furthermore, this energy-converted data is subtracted from the projection data illustrated in 501 in Fig. 5A (this step corresponds to 104 in Fig. 1). The result of this subtraction is illustrated in 503 in Fig. 5C. Then, this projection data is subjected to a Fourier transform. Moreover, the other projection data are obtained by photographing the target with the same-energy X-rays and from different irradiation angles, then being subjected to subtraction of the projection data and a Fourier transform. Furthermore, the resultant entire Fourier transformed projection data are synthesized, thereby creating a two-dimensional Fourier transformed image. Finally, this two-dimensional Fourier transformed image is subjected to an inverse Fourier transform (i.e., reconstruction). This reconstruction allows acquisition of a reconstructed image illustrated in Fig. 5D (this step corresponds to 105 in Fig. 1). This reconstructed image indicates the cross-section in a state where the iron-made cylindrical column 302 does not exist, and where nothing remains at the position (i.e., hole 504). Also, this image makes it possible to determine the position and size 505 of the aluminum-made cylindrical column 303.

By taking advantage of the above-described X-ray CT image reconstruction method, it becomes possible to implement, as the artifact-reduced images, the X-ray CT image reconstruction of the cross-sectional structure of the iron-made cylindrical column 302 and the aluminum-made cylindrical column 303 which constitute the to-be-measured target 300. Also, superimposing on each other Fig. 4B and Fig. 5D obtained in this way allows creation of a structure diagram of the to-be-measured target 300.

### [Embodiment 2]

Referring to Fig. 3 through Fig. 6A to Fig. 6E, the explanation will be given below concerning a second embodiment of the present invention. In the first embodiment, the cross-sectional structure of the parts of the two types of materials has been acquired. In the present embodiment, however, the cross-sectional structure of a to-be-measured target constituted with parts of three types of materials will be acquired. Incidentally, steps until the cross-sectional structure of the iron-made cylindrical column 302 and the aluminum-made cylindrical column 303 has been acquired are common to the first embodiment.

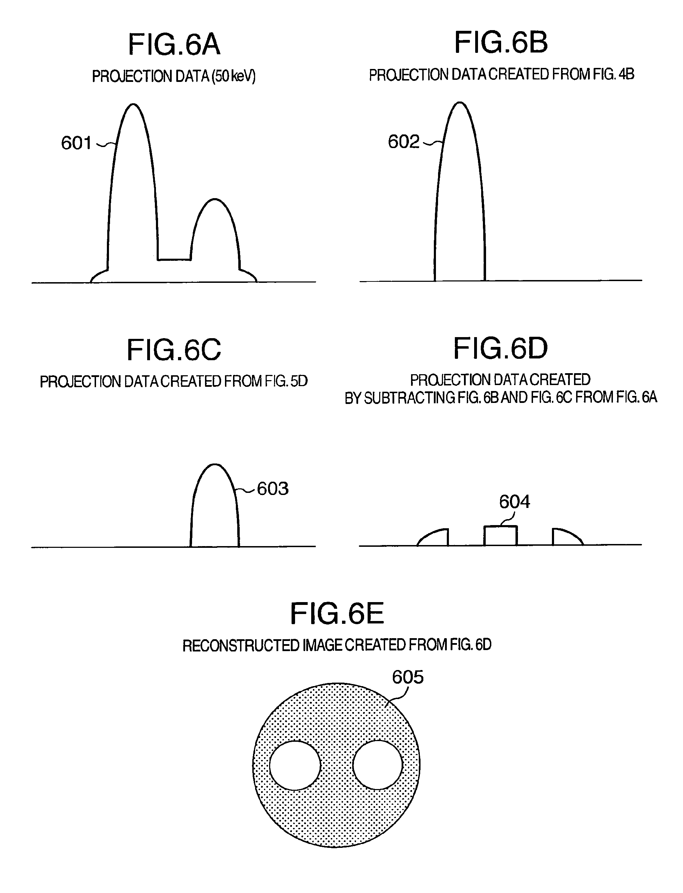

In the present embodiment, the to-be-measured target 300 is photographed in such a manner that the energy of X-rays is further lowered down to a certain level (e.g., 50 keV) (this step corresponds to 106 in Fig. 1). Projection data obtained in this case is illustrated in Fig. 6A. Moreover, projection data illustrated in 602 in Fig. 6B, which is to be obtained by photographing only the iron-made cylindrical column 302 illustrated in Fig. 4B with the use of the 50-keV X-rays, is created by performing the energy conversion. Also, projection data illustrated in 603 in Fig. 6C, which is to be obtained by photographing only the aluminum-made cylindrical column 303 illustrated in Fig. 5D with the use of the 50-keV X-rays, is created by performing the energy conversion. Furthermore, the projection data in Fig. 6B and the projection data in Fig. 6C are subtracted from the projection data illustrated in Fig. 6A. This subtraction results in acquisition of projection data illustrated in 604 in Fig. 6D. Then, this projection data is reconstructed (i.e., projection data from the other irradiation angles also undergoes basically the same operations, then being subjected to the Fourier transform and the two-dimensional inverse Fourier transform), thereby obtaining a reconstructed image illustrated in Fig. 6E. This reconstructed image is an image indicating only the position and size 605 of the resin 301 in a case where there exists neither the iron-made cylindrical column 302 nor the aluminum-made cylindrical column 303.

Superimposing on each other Fig. 4B, Fig. 5D, and Fig. 6E obtained in this way, ultimately, allows acquisition of the cross-sectional view illustrated in Fig. 3.

### [Embodiment 3]

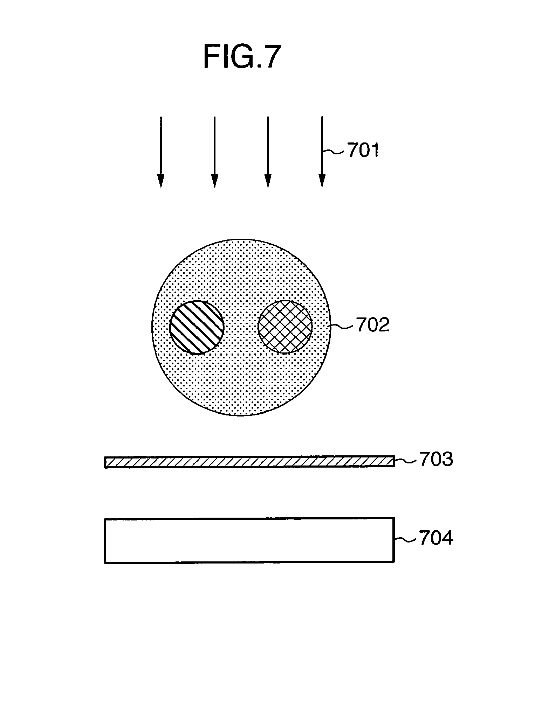

Referring to Fig. 7, the explanation will be given below concerning still another embodiment of the present invention. In the first embodiment, the energy of X-rays, with which the to-be-measured target is to be irradiated, is changed depending on the materials of the parts which constitute the to-be-measured target. Basically the same effect, however, can be obtained by setting up a physical object having variable transmissivity on an optical path 701 of X-rays. A plate of metal (such as aluminum or copper) positioned perpendicularly to the optical path of X-rays is simple and convenient as the physical object which should be set up. The thickness of the plate makes it possible to control the transmissivity. As the position at which the plate should be set up, a plate 703 is set up between a to-be-measured target 702 and a camera 704 in Fig. 7. This position, however, is not necessarily needed. Whatever position is all right as long as the point intersects the optical path 701 of X-rays. For example, a position in front of the to-be-measured target 702 (i.e., opposite side to the camera 704) is quite satisfactory.

It should be further understood by those skilled in the art that although the foregoing description has been made on embodiments of the invention, the invention is not limited thereto and various changes and modifications may be made without departing from the spirit of the invention and the scope of the appended claims.

## Claims

1. An X-ray CT image reconstruction method for acquiring plural pieces of projection data (304) by irradiating a to-be-measured-target (300) with X-rays from a large number of surrounding directions of said to-be-measured-target (300), and creating reconstructed image of said to-be-measured-target (300) by reconstructing said plural pieces of projection data (304),
said X-ray CT image reconstruction method, comprising a step of:
acquiring said respective plural pieces of projection data (304) by using said plurality of X-rays with respect to said one and same to-be-measured-target (300), said plurality of X-rays having mutually different energies.

2. The X-ray CT image reconstruction method according to Claim 1, further comprising a step of:
acquiring reconstructed image (404) of only a part (302) of a material by using X-rays, said material having an X-ray absorption coefficient out of parts (302, 301, 303) constituting said to-be-measured-target (300), said X-rays having an energy corresponding to said coefficient.

3. The X-ray CT image reconstruction method according to Claim 2, further comprising a step of:
creating projection data (502) on said part (302) from said reconstructed image acquired (404).

4. The X-ray CT image reconstruction method according to Claim 3, further comprising a step of:
creating new projection data (503) by subtracting said created projection data (502) from projection data (501) which is acquired by using X-rays whose energy is different from said corresponding energy.

5. The X-ray CT image reconstruction method according to Claim 1, wherein
said energies of said X-rays are set at a constant value in substitution for said method of using said X-rays having said mutually different energies,
a physical object (703) having mutually different X-ray transmissivities being set up on an X-ray optical path (701).

6. An X-ray CT image reconstruction method for acquiring photography data (304) by irradiating a to-be-measured-target (300) with X-rays from its surroundings, and creating image of said to-be-measured-target (300) by reconstructing said photography data (304),
said X-ray CT image reconstruction method, comprising:
a first photography step of acquiring first photography data (402, 401, 403) by using X-rays having a first energy;
a first image reconstruction step of creating a first image (404) by reconstructing said first photography data (402, 401, 403);
a second photography step of acquiring second photography data (501) by using X-rays having a second energy, said second energy being lower than said first energy;
a first conversion step of calculating first conversion data (502) from said first image (404);
a subtraction step of subtracting said first conversion data (502) from said second photography data (501); and
a second image reconstruction step of creating a second image (505) by reconstructing said photography data (503) which has resulted from said subtraction.

7. The X-ray CT image reconstruction method according to Claim 6, wherein,
at said first image reconstruction step, said reconstruction is performed by applying a Fourier transform to said first photography data (402, 401, 403), and applying an inverse Fourier transform to said Fourier-transformed first photography data (402, 401, 403),
at said second image reconstruction step, said reconstruction being performed by applying a Fourier transform to said photography data (503) which has resulted from said subtraction, and applying an inverse Fourier transform to said Fourier-transformed photography data (503).

8. The X-ray CT image reconstruction method according to Claim 6, wherein,
at said first conversion step, photography data is calculated from said first image (404), said photography data being acquired when said to-be-measured-target (300) displayed on said first image (404) is photographed with said second energy.

9. The X-ray CT image reconstruction method according to Claim 6, further comprising:
an image superimposition step of creating an image by superimposing said first image (404) and said second image (505) on each other.

10. The X-ray CT image reconstruction method according to Claim 6, further comprising:
a third photography step of acquiring third photography data (601) by using X-rays having a third energy, said third energy being lower than said second energy;
a second conversion step of calculating second conversion data (602) from said first image (404);
a third conversion step of calculating third conversion data (603) from said second image (505);
a subtraction step of subtracting said second and third conversion data (602, 603) from said third photography data (601); and
a third image reconstruction step of creating a third image (605) by reconstructing said photography data (604) which has resulted from said subtraction.

11. The X-ray CT image reconstruction method according to Claim 10, wherein,
at said second conversion step, photography data is calculated from said first image (404), said photography data being acquired when said to-be-measured-target (300) displayed on said first image(404) is photographed with said third energy;
at said third conversion step, photography data being calculated from said second image (505), said photography data being acquired when said to-be-measured-target (300) displayed on said second image (505) is photographed with said third energy.
